Europäisches Patentamt

European Patent Office

Office européen des brevets

(19)

(11) Publication number: **0 273 878**
**A1**

## (12) EUROPEAN PATENT APPLICATION

(21) Application number: **87830415.3**

(22) Date of filing: **20.11.87**

(51) Int. Cl.⁴: **B 60 K 23/08**
**B 60 K 17/34**

(30) Priority: **23.12.86 IT 5425486**

(43) Date of publication of application:
**06.07.88 Bulletin 88/27**

(84) Designated Contracting States: **DE ES FR GB SE**

(71) Applicant: **FIAT AUTO S.p.A.**
**Corso Giovanni Agnelli 200**
**I-10135 Torino (IT)**

(72) Inventor: **Faizoni, Gian Luigi**
**Via Malta, 36/10 bis**
**I-10141 Torino (IT)**

**Cordero, Federico**
**Via Passo Buole, 166**
**I-10135 Torino (IT)**

(74) Representative: **Buzzi, Franco et al**
**c/o Jacobacci-Casetta & Perani S.p.A. Via Alfieri, 17**
**I-10121 Torino (IT)**

(54) **Device for converting a front-wheel-drive transmission of a motor vehicle with a transverse engine into a transmission with engageable and disengageable four-wheel drive.**

(57) A device for converting a front-wheel-drive transmission of a motor vehicle with a transverse engine into a transmission with engageable and disengageable four-wheel drive, comprising a dog clutch (14) including a slidable coupling sleeve (15) carried by a hollow shaft (13) coaxial with one of the half-shafts (11) and fixed for rotation with the housing (7) of the front differential (9). The coupling sleeve (15) is axially movable between a withdrawn disengaged position and an advanced engaged position for rotating a tubular member (21) mounted coaxially on the hollow shaft (13) for transmitting the drive to the rear half-shafts (35, 36) of the vehicle through a transmission unit (26-30, 33) and a rear differential (34).

FIG. 2

EP 0 273 878 A1

## Description

### Device for converting a front-wheel-drive transmission of a motor vehicle with a transverse engine into a transmission with engageable and disengageable four-wheel drive.

The present invention relates in general to motor vehicles with a transverse engine and front-wheel drive, including a gearbox with an output member which drives an epicyclic front differential driving the half-shafts of the front wheels of the vehicle.

The object of the present invention is to produce a relatively simple and compact device of reduced size for converting a front-wheel drive of the type defined above into a manually engageable and disengageable four-wheel-drive transmission.

The device according to the invention is characterised in that it comprises a dog clutch including a slidable coupling sleeve carried by a hollow shaft coaxial with one of the half-shafts and fixed for rotation with the housing of the front differential, the coupling sleeve carrying an internal gear for cooperating with a first ring gear with external teeth carried by a tubular member coaxially rotatably mounted on the hollow shaft and carrying a second ring gear, a rear differential for transmitting the torque to the half-shafts of the rear wheels of the vehicles and driven by the second ring gear through a transmission unit, and means for causing axial movement of the coupling sleeve relative to the tubular member between a withdrawn disengaged position and an advanced engaged position of the dog clutch.

The transmission unit of the device conveniently comprises a countershaft adjacent and parallel to the said front half-shaft and carrying a second gear which meshes with the second ring gear, and an output unit including a pair of bevel gears of which one is fast with the countershaft and the other is kinematically connected to the rear differential.

The front differential, the dog clutch and the transmission unit are conveniently contained in a common casing fixed to the gearbox.

Movement of the coupling sleeve between the withdrawn disengaged position and the advanced engaged position of the dog clutch is conveniently caused by means of a manually-operated rocker lever. Moreover, a device may be associated with the coupling sleeve for snap-positioning it in the withdrawn disengaged position.

The invention will be described in detail with reference to the appended drawings, provided purely by way of non-limiting example, in which:

Figure 1 is a schematic perspective view of a front-wheel-drive transmission of a motor vehicle, incorporating a conversion device according to the invention, and

Figure 2 is a partially sectioned view of a detail of the transmission of Figure 1, on an enlarged scale.

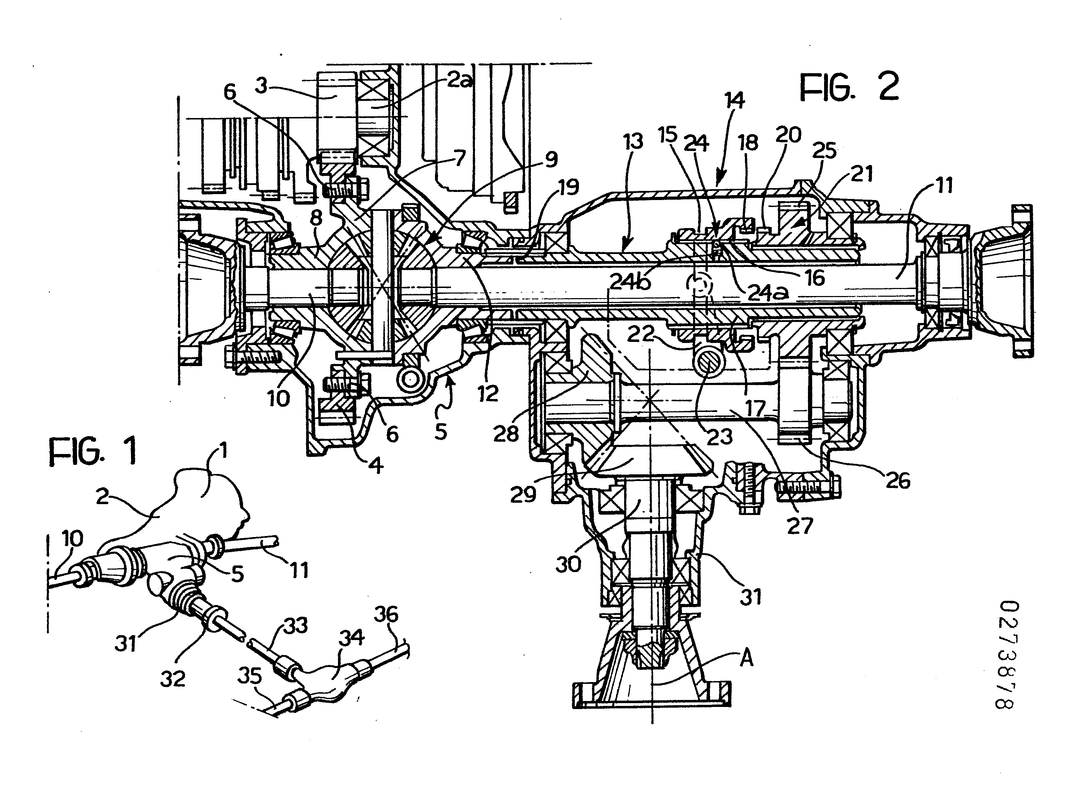

In Figure 1, an internal combustion engine, schematically indicated 1, is intended to be mounted in the front part of a motor vehicle with its axis arranged transverse the longitudinal axis of the vehicle, indicated A in Figure 2. The engine 1 is provided with a gearbox 2, normally of the type with permanently meshed gears, having a main shaft, not illustrated, and a driven shaft 2a also transverse the longitudinal axis A of the vehicle.

A gear 3 is carried by the driven shaft 2a of the gearbox and meshes with a ring gear 4 fixed by means of bolts 6 to the housing 7 of a front differential 9. This differential 9, of epicyclic bevel-gear type, transmits the torque to the front wheels of the motor vehicle by means of two half-shafts 10, 11, in the manner explained below.

The housing 7 of the differential 9 has on one side a tubular appendage 8 coaxial with the half-shaft 10, and on the opposite side a tubular appendage 12 which coaxially surrounds the inner end of the other half-shaft 11. This tubular appendage 12 is coupled for rotation with a hollow shaft 13 extending coaxially on the half-shaft 11, by means of a splined sleeve 19.

A dog-clutch, generally indicated 14, is housed within the casing 5 and includes a slidable coupling sleeve 15 fixed for rotation with an enlarged portion 17 of the hollow shaft 13 by means of a splined coupling 16.

The coupling sleeve 15 carries an internal gear 18 for cooperating, in the manner clarified below, with a first ring gear 20 of a tubular member 21 coaxially rotatably mounted on the outer end of the tubular shaft 13.

The coupling sleeve 15 is axially movable along the hollow shaft 13 between a withdrawn disengaged position, illustrated in Figure 2, in which the gears 18 and 20 are axially separated from each other, and an advanced engaged position in which the gears 18 and 20 are meshed. This movement is effected by means of a rocker lever 22 controlled by a manually-operated shaft 23 through a mechanism which is not illustrated.

A snap-positioning device is generally indicated 24 and consists of a ball 24a which is movable in the enlarged portion 17 of the hollow shaft 13 and thrust radially outwardly by a spring 24b to retain the coupling sleeve 15 in the withdrawn disengaged position.

The tubular member 21 carries a second ring gear 25 which meshes with a gear 26 carried by one end of a countershaft 27 also rotatably supported by the casing 5. The shaft 27 is adjacent and parallel to the half-shaft 11 and carries at its opposite end a bevel gear 28 meshing with a bevel pinion 29 on the inner end of a shaft 30 supported rotatably within a cylindrical appendage 31 of the casing 5, arranged along the longitudinal axis A of the vehicle. The end of the shaft 30 opposite the bevel pinion 29 is connected, by means of a constant-velocity universal joint, generally indicated 32 in Figure 1, to a transmission shaft 33 for transmitting the torque to a conventional rear differential 34. The differential 34 transmits the torque to the half-shafts 35, 36 of the rear wheels of the vehicle.

In operation, the torque imparted by the output gear 3 of the gearbox is transmitted to the half-shafts 10, 11 of the front wheels through the front differential 9. In normal running conditions, that is, with sufficient road holding, the coupling sleeve 15 is kept in the withdrawn disengaged position, so that the transmission shaft 33 and therefore the half-shafts 35 and 36 are disconnected from the power unit.

In order to engage four-wheel drive, for example, when running on a slippery road surface, the sleeve 15 must be moved from the withdrawn position to the advanced engaged position in order to cause engagement between the gears 18 and 20. In this situation, the torque is transmitted to the tubular member 21 and thus to the rear differential 34 through the gears 25 and 26, the shaft 27, the bevel gears 28, and 31, and the shafts 30 and 33.

**Claims**

1. A device for converting a front-wheel-drive transmission of a motor vehicle with a transverse engine into a transmission with engageable and disengageable four-wheel drive, in which the front-wheel-drive transmission includes a gearbox with an output member which drives an epicyclic front differential driving the half-shafts of the front wheels of the vehicle, characterised in that it comprises a dog clutch (14) including a slidable coupling sleeve (15) carried by a hollow shaft (13) coaxial with one of the half-shafts (11) and fixed for rotation with the housing (7) of the front differential (9), the coupling sleeve (15) carrying a ring gear with internal teeth (18) for cooperating with a first ring gear (20) with external teeth carried by a tubular member (21) coaxially rotatably mounted on the hollow shift (13) and carrying a second ring gear (25), a rear differential (34) for transmitting the torque to the half-shafts of the rear wheels (35, 36) of the vehicle and driven by the second ring gear (25) through a transmission unit (26, 27, 28, 29, 30, 33), and means (22, 23) for causing axial movement of the coupling sleeve (15) relative to the tubular member (21) between a withdrawn disengaged position and an advanced engaged position of the dog clutch (14).

2. A device according to Claim 1, characterised in that the transmission unit comprises a countershaft (27) adjacent and parallel to the front half-shaft (11) and carrying a gear (26) which meshes with the second ring gear (25), and an output unit including a pair of bevel gears (28, 29) of which one is fast with the countershaft (27) and the other is kinematically connected to the rear differential (34).

3. A device according to Claim 1 or Claim 2, characterised in that the front differential (9), the dog clutch (14) and the transmission unit (25, 26, 27, 28, 29, 30) are contained in a common casing fixed to the gearbox (5).

4. A device according to any one of the preceding claims, characterised in that the means for causing axial movement of the coupling sleeve (15) include a manually-operated rocker lever (22).

5. A device according to one or more of the preceding claims, characterised in that it includes a device (24) for snap-positioning the coupling sleeve (15) in the withdrawn disengaged position of the dog clutch (14).

0273878

FIG. 2

FIG. 1

| | **DOCUMENTS CONSIDERED TO BE RELEVANT** | | EP 87830415.3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| P,A | EP - A1 - 0 226 666 (TOYOTA)<br>* Fig. 2-6 *<br>-- | 1 | B 60 K 23/08<br>B 60 K 17/34 |
| A | DE - A1 - 3 334 905 (TOYO)<br>* Fig. 1,2 *<br>-- | 2-4 | |
| A | US - A - 4 431 079 (SUZUKI)<br>* Fig. 1-6 *<br>---- | 1-4 | |

TECHNICAL FIELDS
SEARCHED (Int. Cl 4)

B 60 K

The present search report has been drawn up for all claims

| Place of search | Date of completion of the search | Examiner |
|---|---|---|
| VIENNA | 17-03-1988 | ZINN-ZINNENBURG |